# EUROPÄISCHE PATENTANMELDUNG

(11) **EP 0 748 977 A2**
(43) Veröffentlichungstag der Anmeldung: **18.12.1996**
(21) Anmeldenummer: 96101711.8
(22) Anmeldetag: 07.02.1996
(51) Int. Cl.: F16L 55/132

(54) **Absperrvorrichtung für Rohrleitungen und Vorrichtung zum Setzen der Absperrvorrichtung**

(30) Priorität: 16.06.1995 DE 19521834
(71) Anmelder: K. Ullrich GmbH & Co. KG, 67346 Speyer (DE)
(72) Erfinder: Ullrich, Thomas, D-67346 Speyer (DE)
(74) Vertreter: Rehmann, Klaus-Thorsten, Dipl.-Ing.

(57) **Zusammenfassung**

Eine Absperrvorrichtung für Rohrleitungen, insbesondere zum Transport gasförmiger Medien, mit einer durch ein Druckmedium aufweitbaren Blase (1, 2), die zumindest an einem Ende mit einem Schlauch (8, 8', 8'') verbunden ist, innerhalb dessen Druckleitungen (10, 10a, 10b, ...) oder dergleichen verlaufen, zeichnet sich dadurch aus, daß die Blase (1, 2) mehrteilig aufgebaut ist und mindestens aus einer das Druckmedium aufnehmenden Innenblase (62), einer die Innenblase (62) umgebenden Zwischenhülle (61) und einer die Zwischenhülle (61) umgebenden Außenblase (60) besteht, wobei Innenblase (62) und Außenblase (60) aus einem gummielastischen Werkstoff und die Zwischenhülle (61) aus einem festen, formgebenden Werkstoff hergestellt sind.

## Beschreibung

Die Erfindung betrifft eine Absperrvorrichtung für Rohrleitungen, insbesondere zum Transport gasförmiger Medien, mit einer durch ein Druckmedium aufweitbaren Blase, die zumindest an einem Ende mit einem Schlauch verbunden ist, innerhalb dessen Druckleitungen oder dergleichen verlaufen. Außerdem eine Vorrichtung zum Setzen der Absperrvorrichtung in einem Rohr, bestehend aus einem mit einer auf dein Rohr befestigten Anbohrbrücke verbindbaren Kupplungsglied und einer mit dem Kupplungsglied verbindbaren rohrförmigen Schleuse, wobei das Kupplungsglied mit einem absperrbaren Hahn versehen ist und die Schleuse einen absperrbaren Verbindungsanschluß mit der Umgebung aufweist.

Bei Reparatur- oder Montagearbeiten insbesondere an in Betrieb befindlichen Gasleitungen ist es notwendig, die Leitung vor Beginn der Arbeiten vor und hinter der Reparatur- bzw. Montagestelle abzusperren. Gegebenenfalls muß auch ein Bypass eingerichtet werden.

Hierzu müssen besondere Maßnahmen zur Sperrung der Rohrquerschnitte vorgenommen werden. Dabei müssen Sperrsysteme zum Einsatz kommen, mit denen ohne Gasausströmung Leitungen gesperrt werden können. Zu solchen Sperrsystemen gehören zum Beispiel Blasensetzgeräte oder Stopfensetzgeräte.

In der Veröffentlichung "Neue DELIWA-Zeitschrift", Heft 2/88, Seite 48 ist ein Blasensetzgerät offenbart, bei dem im Inneren ein zylindrisches Rohr vorgesehen ist, in dem zwei hintereinander geschaltete Blasen angeordnet sind. Diese Blasen bestehen üblicherweise aus dünnwandigem Gummi und sind aus mehreren zusammen vulkanisierten Einzelteilen zusammengesetzt. Durch den Verbund mehrerer Teile besteht die Gefahr, daß sich die Absperrblase bei der Beaufschlagung mit Druckluft hauptsächlich in Rohrlängsrichtung ausdehnt und schließlich platzt, bevor der Fülldruck erreicht ist. Aus diesem Grund wird die Blase - wie ein Fußball - mit einer Hülle aus einem festen Gewebe, die der Blase in aufgeweitetem Zustand Festigkeit und Form gibt, umgeben.

Das feste Gewebe der Hülle weist kaum elastische Eigenschaften auf. Beim Befüllen kann sich die Blase folglich nicht an jeden Rohrleitungsquerschnitt anpassen. Für jede Rohrleitung muß deshalb eine deren Innendurchmesser angepaßte Hülle mit Blase verwendet werden. Außerdem ist die Oberfläche der Hülle strukturiert. Infolge der Strukturierung kann sich die Hülle nicht vollflächig an die Innenwand der abzusperrenden Rohrleitung anlegen. Zwischen dem Gewebe und der Innenwand der Rohrleitung kann folglich Schleichgas entweichen, so daß die bekannte Absperrvorrichtung hier eine deutliche Schwachstelle bildet.

Ein weiterer Nachteil ergibt sich aus der Reibung zwischen der Hülle und der Rohrleitung. Üblicherweise ist der Reibungskoeffizient so gering, daß die Haftreibung infolge des Anpreßdruckes nicht immer ausreichend ist, den sicheren Sitz der Absperrvorrichtung unter der Belastung des Innendrucks der Rohrleitung zu gewährleisten.

Es sind auch Absperrvorrichtungen bekannt, bei denen nur eine Blase verwendet wird. Aus Sicherheitsgründen werden jedoch vielfach nur Absperrvorrichtungen verwendet, bei denen zwei hintereinander angeordnete und miteinander verbundene, jedoch getrennt beaufschlagbare Blasen verwendet werden. Der Rohrleitungsraum zwischen den beiden Blasen kann dann entlüftet werden.

Zum Setzen der Absperrvorrichtung wird eine Setzvorrichtung mit einer Schleuse verwendet, die auf eine um die Rohrleitung gelegte Anbohrhülse aufgeschraubt werden kann. Im Inneren der Schleuse ist ein axial verschiebbares Rohr vorgesehen, das in seinem Innenbereich die Absperrvorrichtung aufnimmt. Das Rohr der Schleuse wird bis auf den Grund der zuvor angebohrten und abzusperrenden Rohrleitung geschoben, und dann die darin befindlichen Blasen durch in dem unteren Bereich des Rohres vorgesehene Bohrungen, die zuvor in die entsprechende Richtung innerhalb der Rohrleitung gedreht wurden, herausgeschoben. Das Innenrohr der Setzvorrichtung ist notwendig, um den Blasen die vorzugebende Richtung zu erteilen, damit diese nicht in die entgegen der vorzusehenden Absperrstelle verlaufende Richtung geführt werden. Eine visuelle Kontrolle von außen über den Verlauf der Blasen ist naturgemäß nicht möglich.

Bevor die Setzvorrichtung zum Einsatz kommen kann, muß die abzusperrende Rohrleitung zunächst über eine Anbohrvorrichtung angebohrt werden. Hierzu wird zunächst die Anbohrvorrichtung auf eine mit einer Anbohrbrücke verbundenen Gewindekupplung aufgeschraubt. Die Anbohrbrücke oder die Gewindekupplung ist mit einem Kugelhahn versehen, so daß nach dem Anbohren der Rohrleitung die Anbohrstelle über den Hahn abgesperrt werden und die Anbohrvorrichtung aus der Anbohrbrücke bzw. der Gewindekupplung herausgeschraubt werden kann. Dann wird die Schleuse auf die Anbohrbrücke aufgeschraubt, der Kugelhahn wieder geöffnet und das zuvor beschriebene Setzen der Absperrvorrichtung (Blasen) kann erfolgen.

Nachteilig bei diesem System ist es, daß sowohl die Anbohrvorrichtung als auch die Setzschleuse auf die Anbohrbrücke aufgeschraubt werden müssen. Zunächst einmal ist das Aufschrauben sehr zeitaufwendig, insbesondere in kalten Wintermonaten, ist dieser Vorgang für das mit den Arbeiten betraute Personal mit hohen körperlichen Anstrengungen verbunden. Außerdem besteht im Tiefbaubereich natürlich die Gefahr, daß die Gewinde verschmutzen. Wenn diese nicht sorgfältigst gereinigt werden, bevor die Teile zusammengeschraubt werden, ist dann nicht auszuschließen, daß das System nicht dicht ist und Gas entweichen kann.

Von dieser Problemstellung ausgehend soll eine gattungsgemäße Absperrvorrichtung so weiterentwickelt werden, daß die aufgezeigten Nachteile vermieden werden. Außerdem soll die Vorrichtung zum Setzen der Absperrvorrichtung so modifiziert werden, daß ihre Verwendung wesentlich vereinfacht und ihre Sicherheit erhöht wird.

Hinsichtlich der Absperrvorrichtung erfolgt die Problemlösung dadurch, daß die Blase mehrteilig aufgebaut ist und mindest aus einer das Druckmedium aufnehmenden Innenblase, einer die Innenblase umgebende Zwischenhülle und einer die Zwischenhülle umgebende Außenblase besteht, wobei Innenblase und Außenblase aus einem gummielastischen Werkstoff und die Zwischenhülle aus einem festen, formgebenden Werkstoff hergestellt sind.

Durch diesen mehrteiligen Aufbau der Blase wird eine äußerst kostengünstige Absperrvorrichtung geschaffen, die eine hohe Dichtwirkung aufweist. Während die Innenblase aufgeweitet wird, zwingt die Zwischenhülle der Innenblase eine Form auf, die an die gummielastische Außenblase so lange weitergegeben wird, bis über die Außenblase die Abdichtung am inneren Rohrumfang erfolgt. Da die Außenhülle ebenfalls aus einem gummielastischen Werkstoff besteht, schmiegt sie sich vollständig an den Rohrinnendurchmesser an und gleicht auch Unebenheiten aus.

Weiterhin vorteilhaft ist, daß auch dann mit der Absperrvorrichtung weitergearbeitet werden kann, wenn die Außenblase beim Setzen reißen sollte. Die Zwischenhülle kann für kurze Zeit durchaus die Funktion der Außenblase übernehmen. Außerdem bietet die Mehrteiligkeit einen raschen und kostengünstigen Ersatz etwa beschädigter Einzelteile. Eine gerissene Außenhülle beispielsweise kann leicht erneuert werden, bevor die Absperrvorrichtung das nächstemal eingesetzt wird.

Insbesondere vorteilhaft ist es, wenn die Zwischenhülle aus einem luftdurchlässigen Gewebe besteht, das besonders vorteilhaft ein Miederstoff ist. Dieses Material bietet ausreichende formgebende Festigkeit und ist dennoch so flexibel, daß es im Notfall Dichtfunktionen übernehmen kann. Diese Zwischenhülle verhindert ein unkontrolliertes Aufweiten der Innenblase und ist mit der Außenhülle eines Fußballs beispielsweise vergleichbar.

Insbesondere vorteilhaft ist es, wenn der Schlauch eine zwischengeschaltete, zumindestens zweiteilige, öffenbare Kammer aufweist, in der Steckverbinder zum Abkuppeln der Druckleitungen von der Blase unterbringbar sind. Diese Steckverbinder können durch jeder Druckleitung zugeordnete Mutter-/Vater-Verbindungsstücke gebildet werden.

Vorteilhaft an dieser Ausgestaltung ist es, daß die Blase der Absperrvorrichtung entsprechend des geforderten Einsatzzwecks leicht austauschbar ist, indem sie abgekuppelt und eine andere angekuppelt wird. Die Setzgeräte und das sonstige Zubehör der Absperrvorrichtung sind folglich universell verwendbar. Die Kammer kann vorzugsweise durch eine aus zwei Hülsen bestehende Schraubverbindung gebildet werden.

Um die Blase sicher mit dem Schlauch zu verbinden, ist sie zumindest an einem ihrer Enden in einem Übergangsbereich mit einer Querschnittsverringerung auf einen rohrförmigen Ansatz versehen. Über diesen Ansatz kann die Verbindung zwischen Blase und Schlauch durch Wickeln und Verknoten, nach der Art, wie Angelhaken an der Angelschnur befestigt werden, verbunden werden.

Zur Erhöhung der Steifigkeit des Schlauches weist dieser vorzugsweise eine in Umfangsrichtung verlaufende Drahtarmierung auf. Die Armierung kann spiralförmig gewickelt sein. Diese Ausbildung stellt sicher, daß die Blase(n) fest auf dem Schlauch befestigbar ist (sind). Außerdem muß der Schlauch aufgrund seiner Länge aufgerollt zum Arbeitsbereich und von diesem weg transportiert werden. Durch die Armierung wird dem aufgerollten Schlauch eine Form aufgezwungen, die relativ lange anhält, und somit ein vollständig abgewickelter Schlauch nicht gerade, sondern bogenförmig verlaufen wird. Dieser bogenförmige Verlauf bestimmt beim Setzen der Absperrvorrichtung, das heißt dem Einführen der Blase(n) in die Rohrleitung die Richtung, in der die Blase(n) eingeführt wird (werden). Dadurch kann die Setzvorrichtung wesentlich vereinfacht werden, weil die Bedienpersonen durch entsprechende Führung des Schlauches ohne weitere Hilfsvorrichtungen die Richtung bestimmen können, in die die Blase gesetzt wird.

Um das Setzen der Vorrichtung zu vereinfachen, ist es vorteilhaft, wenn mit dem das vordere Ende des Schlauchs verschließenden Stopfen eine Kugel über einen bogenförmig verlaufenden Arm verbunden ist, der der Schlauchkrümmung angepaßt ist. Die Kugel bewirkt dabei ein rasches und einfaches Einschwenken in die richtige Richtung der Rohrleitung.

Die Vorrichtung zum Setzen der Absperrvorrichtung in einer Rohrleitung zeichnet sich dadurch aus, daß die rohrförmige Schleuse in das das Kupplungsglied auf Anschlag einsteckbar und mittels eines gewindelosen Spannverschlusses verbindbar ist.

Mit der so ausgebildeten Vorrichtung wird die Montage der Schleuse auf der Anbohrbrücke wesentlich vereinfacht. Dadurch erfolgt nicht nur eine Entlastung des Arbeitspersonals, wenn dessen Hände vor Kälte starr sind, sondern es wird auch die Zeit, die notwendig ist, um die Verbindung herzustellen, drastisch reduziert.

Vorzugsweise besteht der Spannverschluß aus zwei diametral am Kupplungsglied angeordneten, mit ihren Spannbacken in den Innenbereich des Kupplungsgliedes bringbaren Spannelementen, die in eine im Querschnitt kreisabschnittförmige äußere Ringnut der Schleuse eingreifen, wobei die Spannelemente in bezug auf die Spannbacken exzentrisch gelagert sind, so daß beim Zustellen die Schleuse gegen einen auf einem axialen Absatz im Kupplungsglied liegenden Dichtring gezogen und die gasdichte Verbindung hergestellt wird. Der so ausgebildete Spannverschluß ist relativ unanfällig gegen Verschmutzung und im Bedarfsfalle einfach zu reinigen. Vorzugsweise ist der Dichtring aus Gummi.

Wenn die Schleuse mit einem zusätzlichen absperrbaren Verbindungsanschluß versehen ist, kann sie mit Inertgas gespült werden.

Um eine gute Abdichtung zwischen der Schleuse und dem durch die Schleuse zu schiebenden Schlauch zu erreichen, ist die Schleuse in ihrem oberen Bereich mit einer Mehrzahl von axial beabstandeten Dichtringen versehen, die in ihrem Innendurchmesser dem Außendurchmesser des Schlauches angepaßt sind. Um eine Beschädigung der Dichtringe beim Durchführen des Schlauches zu vermeiden, ist die Schleuse im Bereich der Dichtringe mit einem Schmiernippel versehen, über den gegebenenfalls Fett eingepreßt werden kann, um einerseits die Abdichtung zu bewirken und andererseits die Elastizität der Dichtringe zu erhalten.

Das ganze System zum Anbohren einer gasführenden Rohrleitung und Setzen einer Absperrvorrichtung, bestehend aus einem mit einer auf der Rohrleitung befestigten Anbohrbrücke verbindbaren Kupplungsglied, einer Anbohrvorrichtung und einer rohrförmigen Schleuse wird dann vereinfacht, wenn sowohl die Anbohrvorrichtung als auch die Schleuse in das Kupplungsglied auf Anschlag einsteckbar und mittels eines gewindelosen Spannverschlusses mit diesem verbindbar sind. Das Entfernen der Anbohrvorrichtung nach dem Anbohren der Rohrleitung und Aufsetzen der Setzschleuse zum Einführen der Absperrvorrichtung bzw. der Blasen wird dadurch in kurzer Zeit möglich.

Anhand eines Ausführungsbeispieles soll die Erfindung nachfolgend näher erläutert werden. Es zeigt:
- Figur 1 -: den Längsschnitt durch eine Absperrvorrichtung mit zwei hintereinander angeordneten Blasen;
- Figur 2 -: den Längsschnitt durch die am vorderen Ende der Absperrvorrichtung liegende Blase in größerem Maßstab;
- Figur 3 -: die schematische Darstellung der erfindungsgemäßen Blase im Längsschnitt;
- Figur 3a -: den Längsschnitt durch ein Ausführungsbeispiel der erfindungsgemäßen Absperrvorrichtung mit zwei hintereinander angeordneten Blasen;
- Figur 3b -: das obere Ende des Schlauches mit daran angeschlossenem Kopfteil;
- Figur 3c -: die Einzelheit bei einer erfindungsgemäßen Ausgestaltung;
- Figur 4 -: den Längsschnitt durch eine Anbohrvorrichtung mit dem zugehörigen Kupplungsglied;
- Figur 5 -: den Längsschnitt durch die Schleuse der Setzvorrichtung

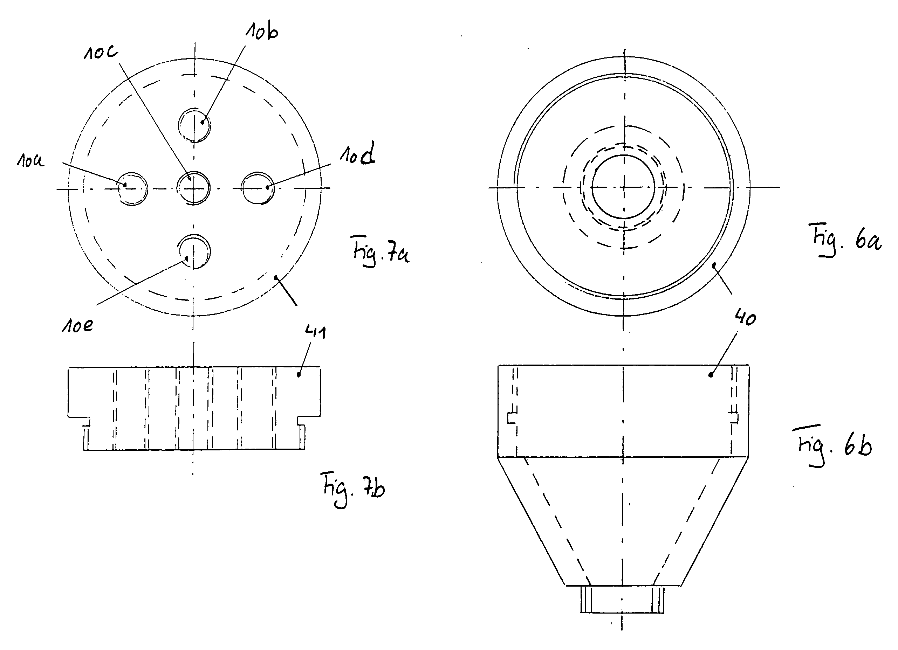

- Figur 6a -: die Draufsicht auf das Kopfteil-Unterteil;
- Figur 6b -: die Ansicht des Kopfteil-Unterteils;
- Figur 7a -: die Draufsicht auf das Kopfteil-Oberteil;
- Figur 7b -: die Seitenansicht des Kopfteil-Oberteils.

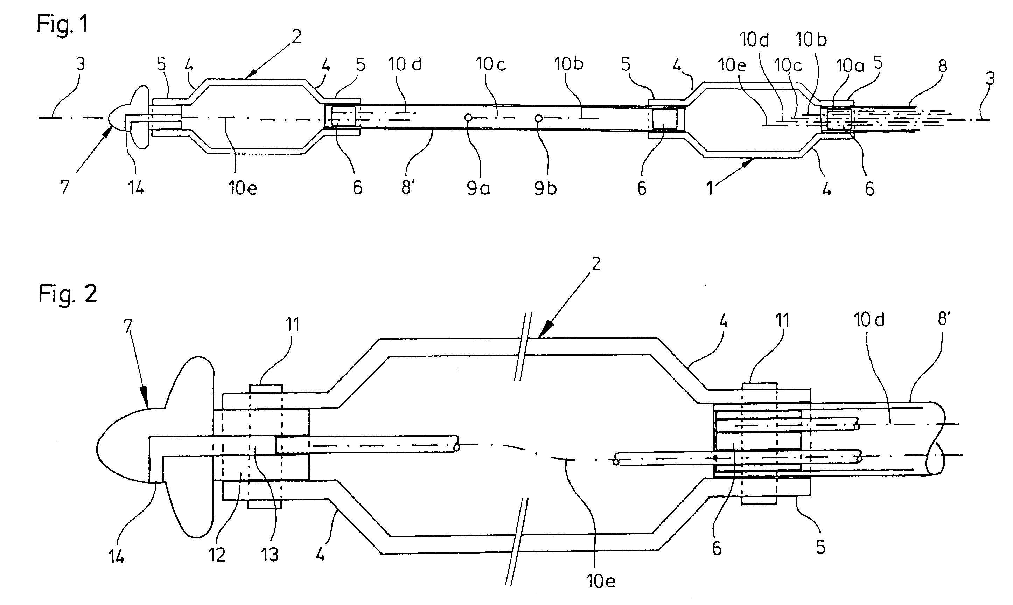

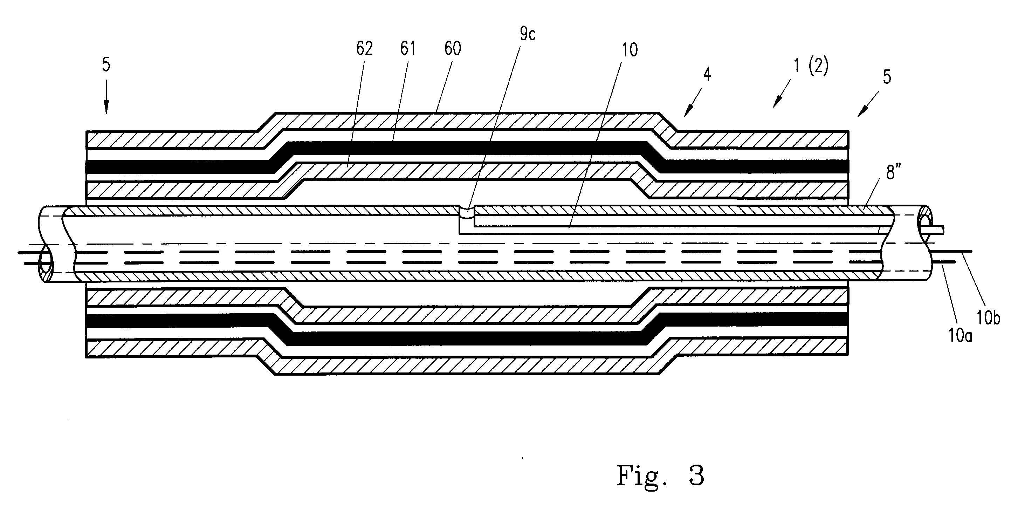

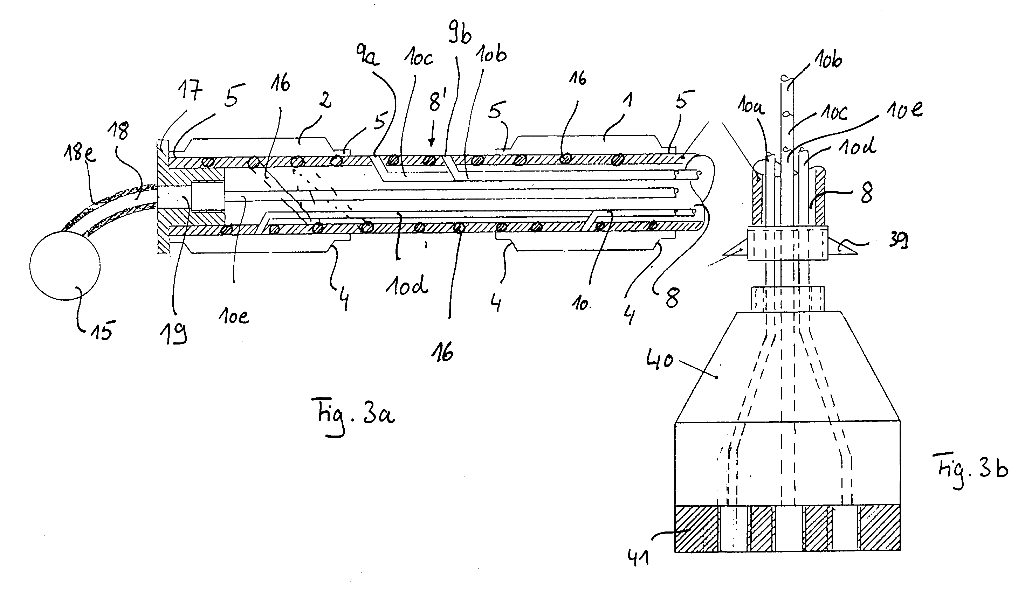

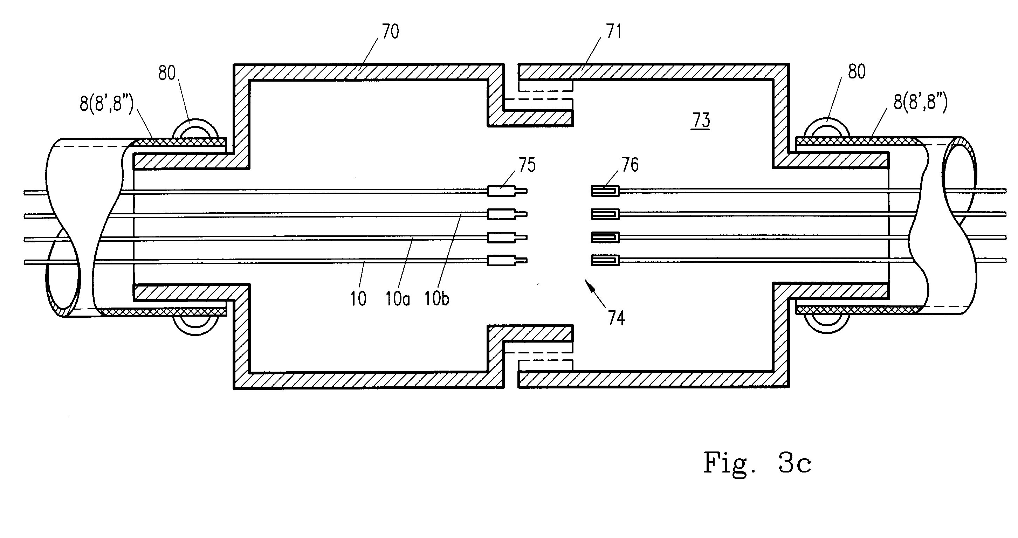

Figur 1 zeigt eine aus zwei entlang einer Achse 3 beabstandeten Blasen 1 und 2 bestehende Absperrvorrichtung. Die Blasen 1 und 2 weisen eine zylindermantelförmige Gestalt auf, wobei die Zylinderachse mit der Achse 3 zusammenfällt. An den Enden der Blasen 1 und 2 sind Übergangsbereiche 4 zu rohrförmigen Ansätzen 5 mit einem geringeren Durchmesser vorgesehen. Die Absperrvorrichtung wird mit der Blase 2 voraus in eine abzusperrende Rohrleitung, beispielsweise eine Gasleitung, eingeführt. Die Blasen 1, 2 sind wie Figur 3 zeigt, mehrteilig aufgebaut. Zwischen der auf dem Schlauch 8'' aufgezogenen Innenblase 62 und der die eigentliche Abdichtung übernehmenden Außenblase 60 ist eine Zwischenhülle 61 angeordnet, die aus einem festen, der Innenblase 62 die Form gebenden Werkstoff hergestellt ist. Dieser Werkstoff ist vorzugsweise luftdurchlässig und ein Gewebe, aus dem üblicherweise Mieder gefertigt werden. Die Innenblase und die Außenblase sind aus einem gummielastischen Werkstoff, einem Kunststoff oder Kautschuk hergestellt. Die Formgebung erfolgt ausschließlich durch die Zwischenhülle 61, die ein Aufweiten der Innenblase 62 in Längsrichtung verhindert.

Die in Einführungsrichtung hintere Blase 1 ist im Bereich der Ansätze 5 durch Stopfen 6 verschlossen. Die vordere Blase 2 ist in dem der Blase 1 zugewandten Ansatz 5 mit einem Stopfen 6 versehen. Das andere Ende der Blase 2 ist durch ein Formteil 7 verschlossen. Beide Blasen 1,2 sind durch einen flexiblen, weitgehend jedoch zug- und druckfesten Schlauch 8 miteinander so verbunden, daß sie in die abzusperrende Rohrleitung eingeführt werden können. Der Schlauch 8 verbindet die sich gegenüberliegenden Enden der Blasen 1 und 2 und wird aus dem in Einführrichtung hinteren Ende der Blase 1 herausgeführt und ist über eine an seinem Ende vorgesehene Verschraubung 39 mit einem Kopfteil 40 verbunden. Der zwischen den Blasen 1 und 2 liegende Teil 8' des Schlauches 8 weist außerdem zwei in Abstand voneinander liegende Öffnungen 9a und 9b auf. Der Schlauch 8 kann durch die Blasen 1,2 durchgängig hindurchlaufen oder jeweils in ihren rohrförmigen Ansätzen 5 enden, so daß zwischen den Blasen 1 und 2 ein separater Schlauch vorgesehen ist.

Innerhalb des Schlauches 8 verlaufen fünf Druckleitungen 10a bis 10e, die die einzelnen Teile der Absperrvorrichtung über das Kopfteil 40 mit dem hier nicht näher dargestellten Steuerelement verbinden. Die Druckleitung 10a dient der Beaufschlagung der Blase 1 mit einem Druckmedium, vorzugsweise mit Druckluft und endet in der Blase 1. Die Druckleitungen 10b bis 10e sind durch die Blase 1 hindurchgeführt. Innerhalb des Teils 8' des Schlauchs 8 führen die Druckleitungen 10b und 10c zu den beiden Öffnungen 9a und 9b. Die Druckleitung 10d dient zur Druckbeaufschlagung der Blase 2 und endet in der Blase 2. Durch die Blase 2 hindurchgeführt ist die Druckleitung 10e und schließt sich an das Formteil 7 an. Die Druckleitung 10e dient zur Detektierung des vor der in die Rohrleitung eingeführten Blase anstehenden Rohrinnendruckes. Hierzu ist die Druckleitung 10e über das Kopfteil 40 an ein hier nicht näher dargestelltes Manometer angeschlossen.

Der Schlauch 8' mündet in den rohrförmigen Ansatz 5 der Blase 2, wodurch der Schlauch 8' und der rohrförmige Ansatz 5 sich etwa über die gesamte Länge des Ansatzes 5 überlappen. Der Außendurchmesser des Schlauchs 8 entspricht in etwa dem Innendurchmesser des Ansatzes 5. In diesem Überlappungsbereich kann sich im Schlauchende ein Stopfen 6 befinden, dessen Durchmesser dem Innendurchmesser des Schlauches 8' entspricht. Der Stopfen 6 weist eine der Anzahl der ankommenden Druckleitungen entsprechende Anzahl von Bohrungen auf, in die die Druckleitungen dichtend eingeklebt werden. Im Ausführungsbeispiel nach Figur 1 sind es lediglich die Druckleitungen 10d und 10e. Über die rohrförmigen Ansätze 5 werden die Blasen 1,2 mit dem Schlauch durch Binden, das heißt Wickeln eines Bandes verbunden. Das Binden oder Festbinden der Blasen 1,2 erfolgt in der Art, in der auch Angelhaken mit der Angelschnur verbunden werden. Hierzu werden mehrere Windungen eines Bandes um den rohrförmigen Ansatz herumgewickelt und dann das Bandende unter den Wicklungen hindurchgezogen und festgezurrt. Ebenso möglich ist es aber auch, den rohrförmigen Ansatz 5 der Blasen 1 und 2 über eine Schelle 11 zu fixieren. Durch das entsprechende Verschließen der Enden wird ein luftdichter Hohlkörper geschaffen.

Am vorderen (in Einführrichtung betrachtet - auf der Zeichnung links) Ende wird die Blase 2 mit einem einen Schaft 12 aufweisenden Formteil 7 in analoger Weise geschlossen, so wie der Stopfen 6 in den rohrförmigen Ansatz 5 am anderen Ende der Blase 2 eingesetzt ist. In den inneren Bereich einer axialen Bohrung 13 durch den Schaft 12 des Formteils 7 ist die Druckleitung 10e eingeklebt. Die Bohrung 13 mündet über eine Öffnung 14 nach außen.

Wie Figuren 3 und 3a zeigen, kann der Schlauch 8', 8'' mit einer spiralförmig in Umfangsrichtung verlaufenden Armierung 16 (Stahldraht) versehen sein. Durch eine geeignete Auswahl der Armierung 16 erhält der Schlauch 8 eine solche Stabilität, daß eine Verbindung der rohrförmigen Ansätze 5 der Blasen 1 und 2 mit dem Schlauch erfolgen kann, ohne daß dazu in den Schlauch 8 ein Stopfen 6 wie in Figuren 1 und 2 gezeigt eingeführt sein müßte. Der Schlauch 8 kann folglich einstückig durch beide Blasen 1,2 hindurchgeführt sein und sein vorderes Ende endet mit dem vorderen Ende der Blase 2. Im Inneren der Blase 1, 2 im ein Schlauch 8', 8'' eine Öffnung 9c vorgesehen, an der die Druckleitung 10 endet, um die Blase 1, 2 mit Druckluft befüllen zu können. Zum Verschließen des Schlauches 8 ist in diesem an seinem vorderen Ende ein Stopfen 17 eingebracht, der eine zentrale Bohrung 19 aufweist. Diese Bohrung 19 ist mit der Druckleitung 10e verbunden. Außerhalb des Schlauchs 8 ist mit dem Stopfen 17 eine Kugel 15 über einen gebogenen Arm 18 verbunden. Der Arm 18 ist hohl ausgeführt und schließt an die Bohrung 19 an. Über eine im Arm 18 vorgesehene Öffnung 18e ist die Druckleitung 10e mit der Umgebung verbunden, so daß sie den in der Rohrleitung anstehenden Druck weiterleiten kann. Die Kugel 15 dient dazu, die Blasen 1,2 beim Einführen in die Rohrleitung in die richtige Richtung zu leiten, wenn sie in hier nicht näher dargestellter Weise auf die Innenwandung der Rohrleitung auftrifft.

Den Blasen 1 und/oder 2 vorgeordnet ist eine durch zwei Hülsen 70, 71, die miteinander verschraubt sind, gebildete Kammer 73. In dieser Kammer 73 sind die Druckleitungen 10, 10a, 10b, ... über Steckverbinder 74 lösbar untergebracht, so daß die Druckleitungen 10, 10a, 10b, ... hinter den Blasen 1, 2 vom Setzgerät bzw. den sonstigen Steuereinrichtungen getrennt werden können. Dadurch ist es möglich, dem Einsatzzweck entsprechende Blasen 1, 2 rasch einsetzen und mit den übrigen Steuergeräten verbinden zu können. Hierzu sind die Hülsen 70, 71 mit den jeweiligen Schlauchenden 8 beispielsweise über eine Schelle 80 oder auch Wickeln verbunden. Anstatt einer Verschraubung zwischen den Hülsen 70, 71 vorzusehen, kann auch ein Bajonettverschluß Verwendung finden.

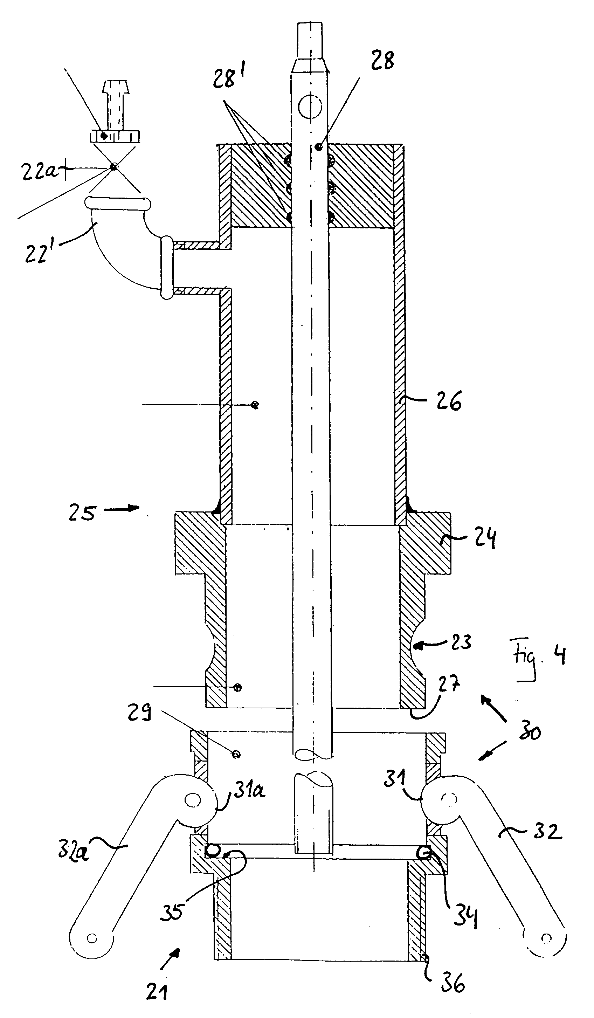

Figur 4 zeigt die Anbohrvorrichtung 25 mit dem Kupplungsglied 21, das über das an ihm vorgesehene Außengewinde 36 mit einer hier nicht näher dargestellten Anbohrbrücke, die mit der Rohrleitung verbunden wird, verschraubbar ist. Das Kupplungsglied 21 ist rohrförmig ausgebildet und weist einen oberen Bereich 29 mit einem größeren Durchmesser auf, der als Aufnahmeteil für das entsprechend ausgebildete Gegenstück für das Kupplungsglied 21 dient. Die Spannbacken 31,31a der Spannelemente 32,32a ragen in den Innenbereich des Kupplungsgliedes 21 hinein. Die Spannbacken 31,31a bilden durch die entsprechende Anlenkung der Spannelemente 32,32a einen Exzenter. Der obere Bereich 29 des Kupplungsgliedes 21 endet nach unten gesehen an einem axialen Absatz 35 auf den ein O-Ring 34 aufgelegt ist.

Die Anbohrvorrichtung 25 weist an ihrem unteren Ende das zum Kupplungsglied 21 ausgebildete Gegenstück 24 auf. Dieses Gegenstück 24 ist hülsenförmig ausgebildet und in seinem oberen Bereich ist ein rohrförmiger Abschnitt 26 eingelötet. Der äußere Umfang des Gegenstücks 24 ist mit einer im Querschnitt kreisbogenförmig ausgebildeten umlaufenden Ringnut 23 versehen. Die Anbohrvorrichtung 25 wird mit dem Gegenstück 24 in das Kupplungsglied so weit eingesteckt, bis sein Ende 27 auf den O-Ring 35 anschlägt. Durch nach Untendrücken der Spannelemente 32,32a schieben sich die exzentrischen Spannbacken 31,31a in die Ringnut 23 und ziehen das Gegenstück 24 und damit die Anbohrvorrichtung 25 gasdicht in das Kupplungsglied 21 ein. Über das Bohrgestänge 28 kann dann die hier nicht näher dargestellte Rohrleitung angebohrt werden. Die Ausbildung der Anbohrbrücken ist hinreichend bekannt, so daß es hier keiner eingehenden Erläuterung bedarf. Es sei jedoch darauf hingewiesen, daß die Anbohrbrücke mit einem Kugelhahn versehen ist, über den die angebohrte Rohrleitung verschließbar ist, so daß über die Anbohrbrücke kein Gas austreten kann, wenn die Anbohrvorrichtung 25 aus dem Kupplungsglied 21 herausgenommen wird. Die Anbohrvorrichtung 25 selbst in ihrem oberen Bereich gasdicht abgedichtet. Die Abdichtung des Bohrgestänges 28 gegenüber der Anbohrvorrichtung 25 erfolgt über O-Ringe 28'. Über den mit einem Kugelhahn 22a versehenen Anschlußstutzen 22' kann sich innerhalb der Anbohrvorrichtung angesammeltes Gas abgefackelt werden, bevor die Anbohrvorrichtung 25 vom Kupplungsglied 21 getrennt wird.

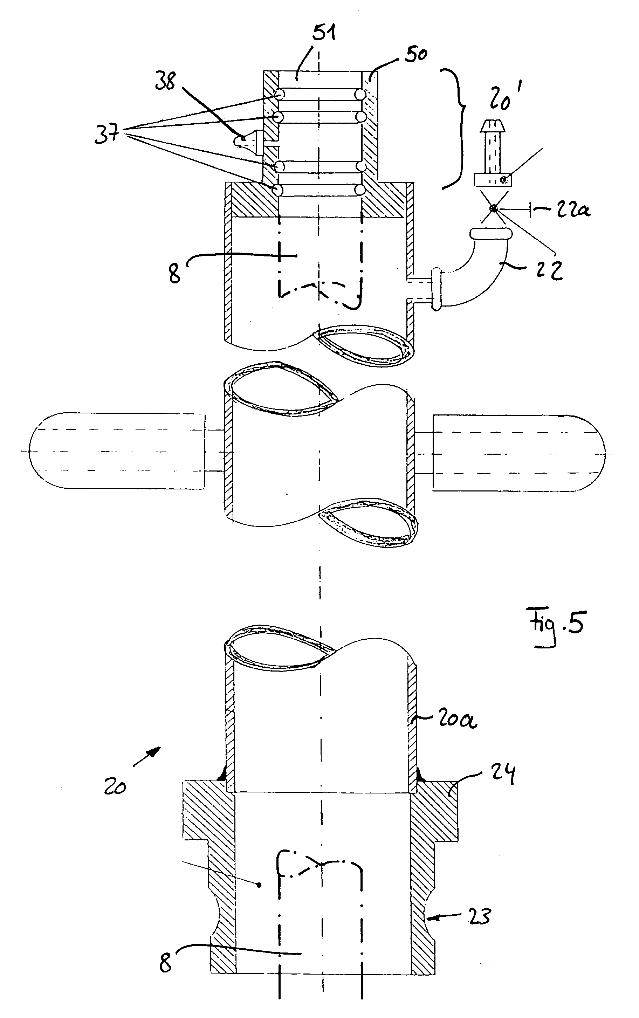

Figur 5 zeigt die Setzschleuse 20 für die Absperrvorrichtung. In ihrem unteren Bereich ist die Setzschleuse 20 ebenfalls mit einem Gegenstück 24 zum Kupplungsglied 21 versehen. Im oberen Bereich des Gegenstücks 24 ist ein ringförmiger Absatz vorgesehen, in den ein Rohr 20a eingesteckt und verlötet ist. Der obere Bereich 20' des Rohres 20a ist über einen Stopfen 50 verschlossen, der eine zum Rohr 20a konzentrische Bohrung 51 aufweist, in die mehrere Ringnuten eingedreht sind und hierin axial beabstandet mehrere Dichtringe 37 aufgenommen werden. Mit einer strichpunktierten Linie angedeutet ist der im Inneren der Schleuse 20 verlaufende Schlauch 8 dargestellt. Die Dichtringe 37 dienen zur gasdichten Abdichtung des Schlauchs 8 in der Schleuse 20.

Der Schlauch 8 wird in die Schleuse 20 von (auf der Zeichnung) unten in die Schleuse 20 eingezogen, bevor die Verschraubung 39 (Figur 3b) an ihm befestigt wird, über die der Schlauch anschließend mit dem Kopfstück 40 verbunden wird.

Zum Setzen der Absperrvorrichtung wird die Schleuse 20 mit dem Gegenstück 24 in das Kupplungsglied 21 bis zum Anschlag eingesetzt und wie zuvor beschrieben über die Spannelemente 32,32a gasdicht mit diesem verbunden. Der Kugelhahn der hier nicht dargestellten Anbohrbrücke wird geöffnet, und der Schlauch 8 vorgeschoben, wodurch die Blasen 1,2 in das Innere der Rohrleitung eingeschoben werden. Wenn die Blasen 1 und 2 in die Rohrleitung vollständig eingeführt sind, werden sie nacheinander über die Druckschläuche 10a und 10d aufgeblasen. Dadurch dehnen sie sich in radialer Richtung bis zu einem Vielfachen ihres ursprünglichen Durchmessers und kommen zur Anlage an der Innenwand der Rohrleitung. Die Festigkeit des elastischen Materials und die Wanddicke der Blasen wirken dabei mit deren zylindermantelförmigen Gestalt so zusammen, daß eine unkontrollierte Ausdehnung in Rohrlängsrichtung verhindert wird. Während des Füllens der zweiten Blase entsteht im Bereich des Teiles 8' im Rohrleitungsabschnitt zwischen den beiden Blasen 1 und 2 ein Überdruck. Durch Entlüften über die beiden Öffnungen 9a,9b und die zugehörigen Druckleitungen 10b,10c läßt sich dieser Überdruck abbauen. Über diese Entlüftungseinrichtung kann der Rohrleitungsabschnitt auch mit einem Inertgas, beispielsweise Stickstoff gespült werden. Über das Formteil 7 bzw. den Stopfen 17 am Ende der Blase 2 und die daran angeschlossene Druckleitung 10e kann der anstehende Druck in der abgesperrten Rohrleitung gemessen werden. Über das Kopfstück 40 ist die Leitung 10e hierzu mit einem nicht näher dargestellten Manometer verbunden. Auch die übrigen Druckanschlüsse, die durch das Kopfstück 40 verbunden werden, sind hier nicht näher dargestellt.

Die zur Rohrwandung hin gerichtete Öffnung 14 verhindert in Zusammenwirken mit der besonderen Gestaltung des Formteils ein Zusetzen der Öffnung mit Schmutz (vergleiche Figur 2).

Nach Beendigung der Arbeiten an der Rohrleitung wird die Druckluft aus den Blasen 1 und 2 abgelassen. Dadurch nehmen sie wieder ihre ursprüngliche Form an und lassen sich so über den Schlauch 8 aus der Rohrleitung wieder herausziehen.

Über den Verbindungsanschluß 22 kann vor Entfernen der Setzschleuse 20 vom Kupplungsglied 21 wie bereits zuvor beschrieben darin befindliches Gas abgefackelt werden. Hierzu ist der Verbindungsanschluß 22 ebenfalls mit einem Kugelhahn 22a versehen. Um die Abdichtung zwischen Schlauch 8 und den Dichtringen 37 wirksam einzuhalten und eine Versprödung der Dichtringe 37 zu verhindern, ist der Stopfen 50 im Bereich zwischen den Dichtringen 37 mit einem Schmiernippel 38, über den Fett ins Innere gequetscht werden kann, versehen.

### Stückliste

- 1: Blase
- 2: Blase
- 3: Achse
- 4: Übergangsbereich
- 5: rohrförmiger Ansatz
- 6: Stopfen
- 6a: Stopfen
- 7: Formteil
- 8: Schlauch
- 8': Schlauch zwischen Blase 1 und 2
- 8'': Blasengestänge
- 9a: Öffnung
- 9b: Öffnung
- 9c: Öffnung
- 10a bis e: Druckleitung
- 11: Schelle
- 12: Schaft
- 13: Bohrung
- 14: Öffnung
- 15: Kugel
- 16: Drahtarmierung
- 17: Stopfen
- 18: Arm
- 19: Bohrung
- 20: Schleuse
- 20a: Rohr
- 20': oberer Bereich von 20
- 21: Kupplungsglied
- 22: Verbindungsanschluß
- 22': Verbindungsanschluß
- 23: Ringnut
- 24: Gegenstück zu 21
- 25: Anbohrvorrichtung
- 26: rohrförmiger Abschnitt
- 27: unteres Ende
- 28: Bohrgestänge
- 28': O-Ring
- 29: oberer Bereich
- 30: Spannverschluß
- 31: Spannbacke
- 31a: Spannbacke
- 32: Spannelement
- 32a: Spannelement
- 34: Dichtring
- 35: Absatz
- 36: Außengewinde
- 37: Dichtring
- 38: Schmiernippel
- 39: Verschraubung
- 40: Kopfteil
- 50: Stopfen
- 51: Bohrung
- 60: Außenblase
- 61: Zwischenhülle
- 62: Innenblase
- 70: Hülse
- 71: Hülse
- 73: Kammer
- 74: Steckverbindung
- 75: Vaterteil
- 76: Mutterteil
- 80: Schelle

## Patentansprüche

1. Absperrvorrichtung für Rohrleitungen, insbesondere zum Transport gasförmiger Medien, mit einer durch ein Druckmedium aufweitbaren Blase (1, 2), die zumindest an einem Ende mit einem Schlauch (8, 8', 8'') verbunden ist, innerhalb dessen Druckleitungen (10, 10a, 10b, ...) oder dergleichen verlaufen, **dadurch gekennzeichnet, daß** die Blase (1, 2) mehrteilig aufgebaut ist und mindestens aus einer das Druckmedium aufnehmenden Innenblase (62), einer die Innenblase (62) umgebenden Zwischenhülle (61) und einer die Zwischenhülle (61) umgebenden Außenblase (60) bestehen, wobei Innenblase (62) und Außenblase (60) aus einem gummielastischen Werkstoff und die Zwischenhülle (61) aus einem festen, formgebenden Werkstoff hergestellt sind.

2. Absperrvorrichtung nach Anspruch 1, **dadurch gekennzeichnet, daß** die Zwischenhülle (61) aus einem luftdurchlässigen Gewebe besteht.

3. Absperrvorrichtung nach Anspruch 2, **dadurch gekennzeichnet, daß** das Gewebe ein Miederstoff ist.

4. Absperrvorrichtung nach Anspruch 1, **dadurch gekennzeichnet, daß** der Schlauch (8, 8', 8'') eine zwischengeschaltete, zumindest zweiteilige, öffenbare Kammer (73) aufweist, in der Steckverbinder (74) zum Abkuppeln der Druckleitungen (10, 10a, 10b, ...) von der Blase (1, 2) unterbringbar sind.

5. Absperrvorrichtung nach Anspruch 4, **dadurch gekennzeichnet, daß** die Steckverbinder (74) durch jeder Druckleitung (10, 1a, 10b, ...) zugeordnete Mutter-/Vater-Verbindungsstücke (75, 76) gebildet werden.

6. Absperrvorrichtung nach Anspruch 4, **dadurch gekennzeichnet, daß** die Kammer (73) durch zwei miteinander verschraubbare Hülsen (70, 71) gebildet wird.

7. Absperrvorrichtung nach Anspruch 1, **dadurch gekennzeichnet, daß** der Schlauch (8, 8', 8'') eine in Umfangsrichtung verlaufende Drahtarmierung (16) aufweist.

8. Absperrvorrichtung nach Anspruch 7, **dadurch gekennzeichnet, daß** die Armierung (16) spiralförmig gewickelt ist.

9. Absperrvorrichtung nach einem der vorstehenden Ansprüche, **dadurch gekennzeichnet, daß** mit einem am vorderen Ende der Blase (1, 2) vorgesehenen Stopfen (17) eine außerhalb des Schlauchs (8) befindliche Kugel (15) über einen bogenförmig verlaufenden Arm (18) verbunden ist.

10. Absperrvorrichtung nach einem der vorstehenden Ansprüche, **dadurch gekennzeichnet, daß** die Blase (2) mit dem rohrförmigen Ansatz (5) durch Binden mit dem Schlauch (8) verbunden ist.

11. Vorrichtung zum Setzen der Absperrvorrichtung in einer Rohrleitung, bestehend aus einem mit einer auf der Rohrleitung befestigten Anbohrbrücke verbindbaren Kupplungsglied (21) und einer mit dem Kupplungsglied (21) verbindbaren rohrförmigen Schleuse (20), wobei das Kupplungsglied (21) mit einem absperrbaren Hahn versehen ist und die Schleuse (20) einen absperrbaren Verbindungsanschluß (22) mit der Umgebung aufweist, **dadurch gekennzeichnet, daß** die rohrförmige Schleuse (20) in das Kupplungsglied (21) auf Anschlag einsteckbar und mittels eines gewindelosen Spannverschlusses (30) verbindbar ist.

12. Vorrichtung nach Anspruch 11, **dadurch gekennzeichnet, daß** der Spannverschluß (30) aus zwei diametral am Kupplungsglied (21) angeordneten mit ihren Spannbacken (31,31a) in den Innenbereich des Kupplungsgliedes (21) bringbaren Spannelementen (32,32a) besteht, die in eine im Querschnitt kreisabschnittförmige äußere Ringnut (23) der Schleuse (20) eingreifen, wobei die Spannelemente (32,32a) in bezug auf die Spannbacken (31,31a) exzentrisch gelagert sind, so daß beim Zustellen die Schleuse (20) gegen einen auf einem axialen Absatz (35) im Kupplungsglied (21) liegenden Dichtring (34) gezogen und die gasdichte Verbindung hergestellt wird.

13. Vorrichtung nach Anspruch 12, **dadurch gekennzeichnet, daß** der Dichtring (34) aus Gummi ist.

14. Vorrichtung nach Anspruch 12, **dadurch gekennzeichnet, daß** die Schleuse (20) mit einem zusätzlichen absperrbaren Verbindungsanschluß versehen ist.

15. Vorrichtung nach einem oder mehreren der vorstehenden Ansprüche, **dadurch gekennzeichnet, daß** die Schleuse (20) in ihrem oberen Bereich (20') mit einer Mehrzahl von axial beabstandeten Dichtringen (37) versehen ist, die in ihrem Innendurchmesser dem Außendurchmesser des Schlauches (8) angepaßt sind.

16. Vorrichtung nach Anspruch 15, **dadurch gekennzeichnet, daß** im Bereich der Dichtringe (37) ein Schmiernippel (38) vorgesehen ist.

17. System zum Anbohren einer gasführenden Rohrleitung und Setzen einer Absperrvorrichtung, bestehend aus einem mit einer auf der Rohrleitung befestigten Anbohrbrücke verbindbaren Kupplungsglied (21), einer Anbohrvorrichtung (25) und einer rohrförmigen Schleuse (20), **dadurch gekennzeichnet, daß** sowohl die Anbohrvorrichtung (25) als auch die Schleuse (20) jeweils in das Kupplungsglied (21) auf Anschlag einsteckbar und mittels eines gewindelosen Spannverschlusses (30) mit dem Kupplungsglied (21) verbindbar sind.
